# EUROPÄISCHE PATENTSCHRIFT

(11) **EP 0 433 232 B1**
(45) Veröffentlichungstag und Bekanntmachung des Hinweises auf die Patenterteilung: **09.03.1994**
(21) Anmeldenummer: 90810947.3
(22) Anmeldetag: 04.12.1990
(51) Int. Cl.: G03B 27/73

(54) **Fotografisches Farbkopiergerät**
Photographic colour copier
Copieur photographique en couleurs

(30) Priorität: 13.12.1989 CH 4478/89
(43) Veröffentlichungstag der Anmeldung: 19.06.1991
(73) Patentinhaber: GRETAG IMAGING AG, CH-8105 Regensdorf (CH)
(72) Erfinder: Brönnimann, Rolf, Dr., CH-8107 Buchs (CH); Maxeiner, Harald, Dr., CH-8107 Buchs (CH)
(74) Vertreter: Kleewein, Walter, Dr.

(56) Entgegenhaltungen:
- EP-A- 0 312 499
- CH-A- 637 223
- DE-A- 3 737 775
- FR-A- 2 621 710

## Beschreibung

Die Erfindung betrifft ein fotografisches Farbkopiergerat gemäss dem Oberbegriff von Patentanspruch 1.

Verfahren und Vorrichtungen zum Bestimmen von Kopierlichtmengen beim Kopieren von Farbvorlagen sind aus zahlreichen Druckschriften bekannt. Beispielsweise offenbart die CH-A-637,223 ein solches Verfahren, welches insbesondere die Verfälschung der Messergebnisse durch Farbdominanten verringert und gleichzeitig eine möglichst farbtreue Widergabe der Vorlage ermöglicht, und die zu diesem Verfahren zugehörige Vorrichtung. Gemäss dieser Druckschrift wird eine Kopiervorlage, z.B. ein Film, über eine zeilenförmige Abtasteinrichtung hinwegbewegt. Jede Abtastzeile weist nebeneinander angeordnete und aneinander grenzende Felder auf. Die zeilenförmige Abtasteinrichtung weist in jedem dieser Felder mindestens drei Messelemente auf, jeweils eines für die Farben rot, grün und blau, die das von dem durchleuchteten Film kommende Licht empfangen und entsprechende Messignale erzeugen. Diese Messignale werden dann mit Hilfe eines Rechners entsprechend ausgewertet.

Ein Farbkopiergerät ist z.B. aus der EP-A-0 312 499 bekannt. Bei dem dort beschriebenen Farbkopiergerät werden die für die Belichtungssteuerung massgeblichen Farbauszugswerte der Kopiervorlage derart gewonnen, dass jeweils eine viele einzelne (gedachte) Abtastbereiche umfassende Zeile der Kopiervorlage beleuchtet und das von jedem abtastbereich der Kopiervorlage kommende Licht von einem Prisma in schmale Spektralbereiche zelegt wird. Dieses in spektrale Bereiche zerlegte Licht beaufschlagt ein zweidimensinales Feld von in Spalten und Zeilen angeordneten lichtelektrischen Wandlern. Die Spalten verlaufen parallel zur Abtastzeile auf der Vorlage, die Zielen senkrecht dazu. Jedem Abtastbereich der beleuchteten Abtasteile auf der Vorlage ist eine Zeile des Wandlerfeldes zugeordnet, jeder individuelle Fotoempfänger einer solchen Zeile einem Spektralbereich des Messlichts vom zugehörigen Abtastbereich. Die einzelnen Zeilen des zweidimensionalen Wandlerfeldes sind dabei nebeneinander angeordnet und zwar in der gleichen Weise wie die zugehörigen Abtastbereich der beleuchteten Abtastzeile auf der Vorlage. Die Abtastung der einzelnen Abtastzeilen der Kopiervorlage erfolgt sequentiell durch entsprechend der gewünschten Auflösung gewählten schrittweisen Vorschub der Kopiervorlage.

Die simultane Abtastung einer kompletten Abtastzeile der Kopiervorlage erfordert also ein zweidimensionales Feld von Fotoempfängern - eine Dimension für die räumliche Auflösung in die einzelnen Abtastbereiche der Zeile, die andere Dimension für die spektrale Auflösung in die einzelnen Spektralbereiche. Die simultane Abtastung der gesamten Kopiervorlage, also sämtlicher Abtastzeilen auf einmal, ist mit einer solchen Abtastvorrichtung nicht möglich, da dafür eine weitere "Dimension" von Fotoempfängern erforderlich wäre. Deshalb muss beim Kopiergerät der EP-A-0 312 499 die Abtastung der einzelnen Zeilen der Kopiervorlage, wie schon erwähnt, sequentiel vorgenommen werden.

Durch die Erfindung soll nun diese Schwierigkeit behoben und die Voraussetzung für eine simultane spektrale Abtastung der gesamten Kopiervorlage geschaffen werden.

Das erfindungsgemässe Kopiergerät, das diese Aufgabe löst, ist im unabhängigen Anspruch beschrieben. Bevorzugte und besonders vorteilhafte Ausgestaltungen ergeben sich aus den abhängigen Ansprüchen.

Beim erfindungsgemässen Kopiergerät ist für die räumliche und spektral aufgelöste Abtastung einer kompletten Abtastzeile nur ein "eindimensionales" Feld Oder Zeile von Fotoempfängern erforderlich, die räumliche und die spektrale Auflösung ist also in eine einzige Dimension verlegt. Damit ist die zweite Dimension für die Abtastzeilen frei, und es kann durch Aneinanderreihung mehrerer solcher Fotoempfängerzeilen eine gleichzeitige Abtastung sämtlicher Abtastzeilen erreicht werden.
Die erfindungsgemässe Reduktion der Dimensionen der Fotoempfängeranordnung hat aber noch einen weiteren wesentlichen Vorteil, der sich aus der Natur der für solche Zwecke üblicherweise eingesetzten ladungsgekoppelten lichtelektrischen Wandler (CCD) ergibt: Eindimensionale Felder solcher Wandler (Zeilen) haben erfahrungsgemäss erheblich bessere elektrische Eigenschaften als zweidimensionale Felder, insbesondere ist der Störabstand (Signal-Rausch-Abstand) wesentlich günstiger. Dadurch wird wiederum das Ergebnis der nachfolgenden elektronisch-rechnerischen Auswertungsoperationen (üblicherweise eine gewichtete Summation der Signale) verbessert. Zudem ist die elektrische Beschaltung der einzelnen Wandler einer solchen Zeile wesentlich weniger komplex.

Im folgenden wird die Erfindung anhand der Zeichnung näher erläutert; es zeigen:
- Fig. 1: eine schematische Uebersichtsdarstellung eines erfindungsgemässen Farbkopiergeräts,
- Fig. 2: eine schematische Axialschnittdarstellung der kompletten Messanordnung des Farbkopiergeräts der Fig. 1,
- Fig. 3: eine schematische Darstellung von Teilen der Messanordnung des Farbkopiergeräts der Fig. 1 zur Erläuterung des grundsätzlichen Funktionsprinzips der Messanordnung,
- Fig. 4: eine Aufsicht in Richtung der Pfeile IV-IV der Fig. 2 auf eine Schlitzmaske der Messanordnung über einem Ausschnitt eines Negativfilmstreifens und
- Fig. 5: eine Aufsicht auf eine Variante der Schlitzmaske über einem Ausschnitt eines Negativfilmstreifens.

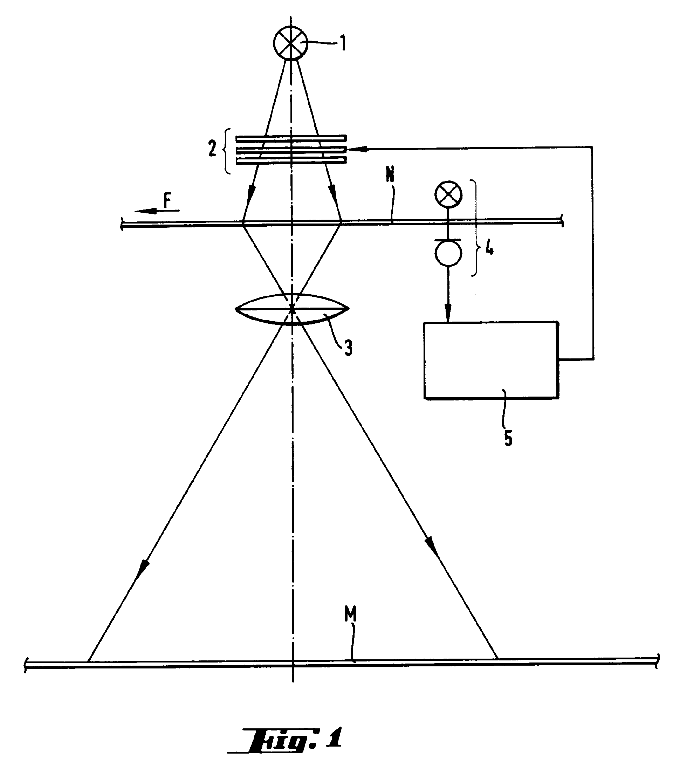

Fig. 1 zeigt die wesentlichsten, für das Verständnis der Erfindung notwendigen Komponenten einer Ausführüngsform des erfindungsgemässen Farbkopiergeräts. Es umfasst eine Kopierlichtquelle 1, einen Satz servogesteuerter Farbverschlüsse 2, eine Abbildungsoptik 3, eine durch eine Messlichtquelle und einen Fotoempfänger symbolisch angedeutete fotoelektrische Messanordnung 4 und eine elektronische Belichtungssteuerung 5. Die mit von der Kopierlichtquelle 1 kommendem Licht beaufschlagte Kopiervorlage N wird mittels der Optik 3 auf lichtempfindliches Kopiermaterial M abgebildet, wobei die Kopierlichtmengen für die einzelnen Teilbelichtungen aufgrund einer vorgängigen bereichsweisen fotoelektrischen Ausmessung und Messwertanalyse der Kopiervorlage von der Belichtungssteuerung 5 ermittelt und über die Farbverschlüsse gesteuert werden. Soweit entspricht das Kopiergerät den in der eingangs erwähnten EP-A-0 312 499 oder der DE-OS-37 37 775 beschriebenen Geräten und bedarf deshalb diesbezüglich keiner näheren Erläuterung.

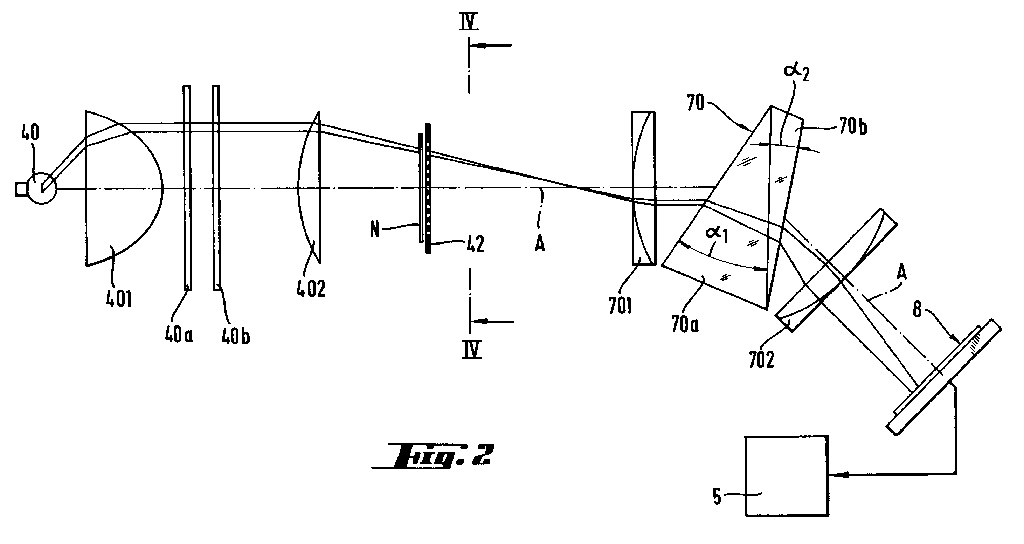

In Fig. 2 ist die fotoelektrische Messanordnung des Farbkopiergeräts im Axialschnitt schematisch dargestellt. Sie umfasst eine Messlichtquelle 40, vier Linsen 401, 402, 701, 702, zwei Anpassfilter 40a und 40b, eine Schlitzmaske 42, ein aus zwei Teilen 70a und 70b bestehendes optisches Prisma 70, sowie eine Fotoempfängeranordnung 8, die mit der Belichtungssteuerung 5 verbunden ist. Die aus der Messlichtquelle 40, den zwei Linsen 401 und 402, sowie den Anpassfiltern 40A und 40B bestehende Beleuchtungsanordnung ist an sich konventionell aufgebaut und beaufschlagt die Kopiervorlage N mit parallelem Licht. Die Anpassfilter 40A und 40B dienen zur Reduzierung von Spektralanteilen, die anteilmässig zu stark im Licht der Messlichtquelle vorhanden sind. Das durch die Kopiervorlage N hindurchtretende Licht beaufschlagt die Schlitzmaske 42, welche das Licht nur im Bereich ihrer Schlitze durchlässt und somit die Kopiervorlage N quasi in viele einzelne Abtastbereiche zerlegt, und gelangt anschliessend über die Linse 701, das Prisma 70 und die Linse 702 auf die Fotoempfängeranordnung 8.

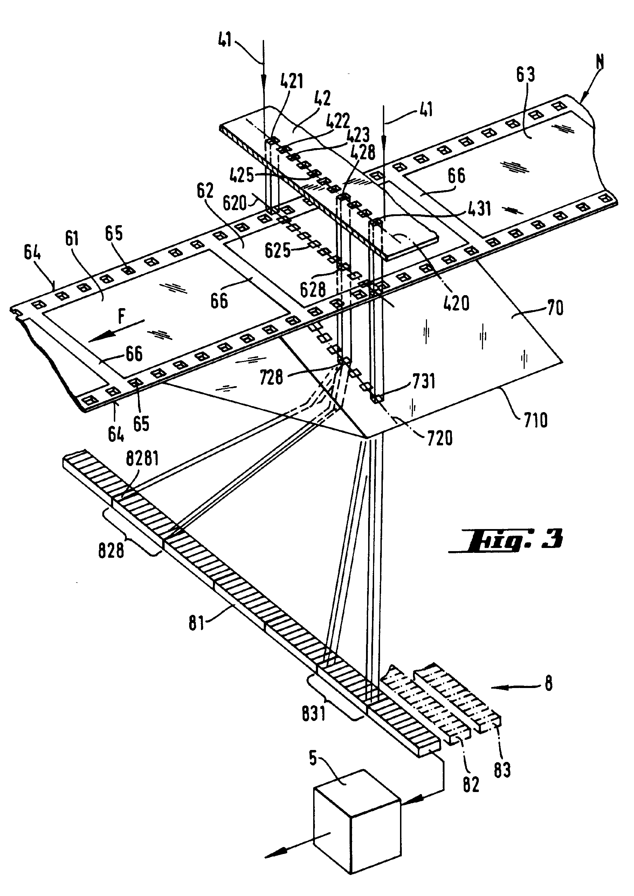

Anhand der Fig. 3, welche einen Teil der Messanordnung 4 schematisch dargestellt zeigt, wird nun das Funktionsprinzip der Messanordnung 4 im Detail erläutert. Aus zeichnerischen Gründen sind dabei sowohl die Beleuchtungsanordnung als auch die beiden Linsen 701 und 702 weggelassen. Die Schlitzmaske 42 befindet sich in praxi ebenfalls im Strahlengang hinter der Kopiervorlage N. Da dies aber auf die prinzipielle Funktion der Messanordnung keinen Einfluss hat, ist die Schlitzmaske 42 aus Gründen der besseren Uebersicht hier im Strahlengang vor der Kopiervorlage N dargestellt.

Das von der Messlichtquelle 40 emittierte Messlicht, symbolisch durch die strichlierten Linien 41 angedeutet, beaufschlagt die Schlitzmaske 42, die nur im Bereich ihrer Schlitze 421, 422, 423 usw. bis 431 für das Messlicht 41 transparent ist. Diese Schlitze 421, 422, 423 usw. sind auf der Maske 42 längs einer durch die strichlierte Linie 420 angedeuteten Zeile, die senkrecht zu Vorschubrichtung F der Kopiervorlage N verläuft, angeordnet. Die Kopiervorlage N in Form eines Negativfilmstreifens mit einer Seitenrandperforation 65 zum Transport wird dementsprechend in einzelnen kleinen Abtastbereichen, von denen aus zeichnerischen Gründen nur wenige, 625 bis 628, dargestellt sind, beleuchtet. Diese Abtastbereiche entstehen auf der Kopiervorlage N aufgrund der Anordnung der lichttransparenten Schlitze 421 bis 431 der Maske 42 ebenfalls längs einer durch die strichlierte Linie 620 angedeuteten Zeile (Abtastzeile) senkrecht zur Vorschubrichtung F der Kopiervorlage N.

Die Auflösung der Messanordnung 4 senkrecht zur Vorschubrichtung F der Kopiervorlage N hängt somit von der Anzahl sowie von den Abmessungen der längs der Zeile 420 auf der Maske 42 angeordneten Schlitze ab. Ueblich sind Auflösungen von etwa 20-40 Abtastbereichen pro Abtastzeile eines Negativs (24×36 mm), so dass die Schlitzmaske eine dementsprechende Anzahl von Schlitzen aufweist. Die Auflösung in Vorschubrichtung F ergibt sich aus dem räumlichen Abstand zweier aufeinanderfolgender Abtastzeilen und somit aus dem Vorschubweg bzw. der Vorschubgeschwindigkeit der Kopiervorlage N und der Zeitspanne zwischen den Abtastungen zweier aufeinanderfolgender Zeilen. Eine Auflösung in Vorschubrichtung F von etwa 30-50 Zeilen pro Negativ ist üblich, so dass ein Negativ (24×36 mm) insgesamt im Mittel etwa in 1000 einzelne Abtastbereiche zerlegt wird.

Das von den Abtastbereichen ausgehende Licht wird von der nur in Fig. 2 dargestellten Linse 701 parallelisiert und beaufschlagt das Prisma 70 (Abtastzeile 720), welches so im Strahlengang angeordnet ist, dass seine Brechkante 710 optisch senkrecht zu der Abtastzeile 620 verläuft und dass es vom Licht aller Abtastbereiche 621 bis 631 der Abtastzeile 620 beaufschlagt wird. Das Prisma zerlegt das von den Abtastbereichen kommende Licht in seine spektralen Anteile, die von der nur in Fig. 2 dargestellten Linse 702 auf die Fotoempfängerzeile 81 geführt werden, in der jedem Spektrum eines Abtastbereichs eine separate Fotoempfängergruppe zugeordnet ist und die Fotoempfängergruppen hintereinander längs der Fotoempfängerzeile 81 aufeinanderfolgen. Beispielsweise beaufschlagt das vom Abtastbereich 628 kommende Licht das Prisma 70 im Bereich 728. Die spektralen Anteile des das Prisma 70 in diesem Bereich 728 beaufschlagenden Lichts werden von der Linse 702 auf die Fotoempfängergruppe 828 in der Fotoempfängerzeile 81 geführt. Jeder individuelle Fotoempfänger 8281 der Fotoempfängergruppe 828 wird dabei von einem schmalen spektralen Bereich beaufschlagt. Die elektrischen Ausgangssignale der einzelnen Fotoempfänger werden dann der Belichtungssteuerung 5 (Fig. 1), deren Funktionsweise z.B. aus EP-A-0 312 499 bekannt ist, zugeführt. Analog gelangt das Licht aus den übrigen Abtastbereichen der Kopiervorlage N jeweils nach spektraler Zerlegung durch das Prisma 70 auf die übrigen Fotoempfängergruppen der Fotoempfängerzeile 81 (z.B. vom Bereich 731 auf dem Prisma 70 auf die Fotoempfängergruppe 831 der Fotoempfängerzeile 81). Die einzelnen Fotoempfängergruppen sind dabei in der Fotoempfängerzeile in der gleichen Weise hintereinander angeordnet wie die ihnen zugeordneten Abtastbereiche der Kopiervorlage.

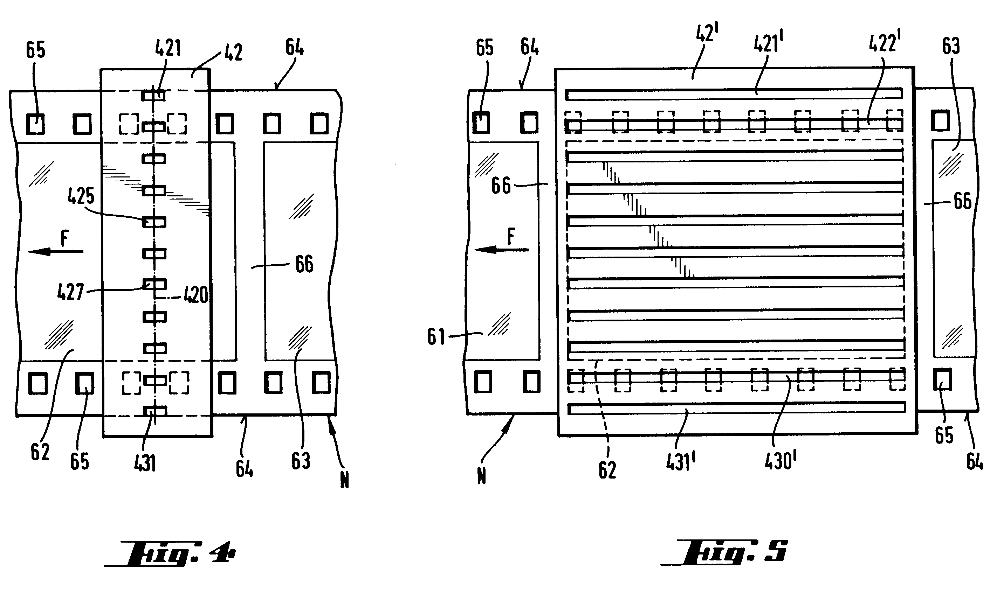

Fig. 4 zeigt die Schlitzmaske 42 und ihre Positionierung relativ zur Kopiervorlage N (entgegengesetzt zum Strahlengang betrachtet). Das durch die Kopiervorlage N hindurchdringende Licht kann die Schlitzmaske 42 nur durch die Schlitze 421-431 durchdringen. Dadurch wird also die Kopiervorlage N quasi in einzelne Abtastbereiche 621-631 längs der Abtastzeile 620 zerlegt (Fig. 3). Die so erzeugten Abtastbereiche 621-631 längs einer solchen Abtastzeile 620 werden also jeweils gleichzeitig beleuchtet. Die Abtastung der gesamten Kopiervorlage erfolgt sequentiell Zeile für Zeile. Im Unterschied zum in EP-A-0 312 499 beschriebenen Kopiergerät wird für die Ausmessung der Abtastbereiche einer Abtastzeile anstatt eines zweidimensionalen Fotoempfängerfeldes nur noch eine eindimensionale Fotoempfängerzeile benötigt. Solche eindimensionalen Fotoempfängerzeilen zeichnen sich, wie bereits erwähnt, durch ein besseres Signal-Rausch-Verhältnis im Vergleich zu zweidimensionalen Fotoempfängerfeldern aus.

Ein alternatives Ausführungsbeispiel der Messanordnung ist in Fig. 5 dargestellt. Dabei erstrecken sich die Schlitze 421′-431′ der Schlitzmaske 42′ senkrecht zu den Abtastzeilen, also in Transportrichtung F des Films N, über ein ganzes Bildfeld 62 des Films N. Das Prisma 70 (siehe Fig. 2 bzw. Fig. 3) ist so bemessen, dass es das gesamte durch den Film N und anschliessend durch die Schlitze 421′-431′ der Schlitzmaske 42′ hindurchtretende Licht spektral zerlegt. Ebenso sind die Linsen 701 bzw. 702 so gross bemessen, dass sie jeweils das gesamte durch den Film N und die Schlitzmaske 42′ hindurchtretende Licht parallelisieren bzw. auf die Fotoempfänger führen. In der Empfängeranordnung 8 (Fig. 3) ist für jede Abtastzeile (Zeile von Abtastbereichen) eine entsprechende Fotoempfängerzeile 81, 82, 83 etc. vorgesehen. Die Auflösung senkrecht zur Vorschubrichtung F erfolgt nach wie vor durch Anzahl und Breite der einzelnen Schlitze 421′-431′; in Vorschubrichtung F ist sie jedoch durch den Abstand der einzelnen Fotoempfängerzeilen voneinander gegeben. In Fig. 3 sind körperlich getrennte Fotoempfängerzeilen 81, 82, 83 angedeutet. Die Fotoempfängerzeilen 81, 82 und 83 stehen symbolisch dafür, dass jeder Abtastzeile auf der Kopiervorlage N jeweils eine Fotoempfängerzeile separat zugeordnet ist. Die Ausgangssignale der einzelnen Fotoempfänger werden dann in analoger Weise wie anhand von Fig.3 beschrieben zur Belichtungssteuerung 5 geführt, welche aus EP-A-0 312 499 bekannt ist. Nach der Ausmessung eines ganzen Bildfeldes wird der Film dann zum nächsten Bildfeld 63 weitertransportiert. Ein mit einer solchen Messanordnung ausgestattetes Kopiergerät weist im Vergleich zu dem in EP-A-0 312 499 beschriebenen Gerät zwei wesentliche Vorteile auf: Zum einen zeichnen sich die einzelnen eindimensionalen Fotoempfängerzeilen, wie bereits erwähnt, im Vergleich zu zweidimensionalen Fotoempfängerfeldern durch ein besseres Signal-Rausch-Verhältnis aus, zum anderen kann die gesamte Kopiervorlage N gleichzeitig ausgemessen werden und es wird für die gleichzeitige Abtastung der ganzen Kopiervorlage N lediglich ein zweidimensionales, aus einzelnen Fotoempfängerzeilen bestehendes, Fotoempfängerfeld benötigt, wogegen im aus der EP-A-0 312 499 bekannten Kopiergerät ein solches zweidimensionales Feld für die Ausmessung von jeweils nur einer einzigen Zeile der Kopiervorlage benötigt wird.

In praxi kann die Maske 42 bzw. 42′ zum Beispiel eine transparente Scheibe sein, auf die die eigentliche Maske aufgedampft ist. Dabei können sich die lichttransparenten Bereiche der Maske durchaus auch über den Seitenrand 64 (siehe Fig. 3 bzw. Fig. 4 und Fig. 5) der Kopiervorlage N erstrecken. So können vorlagenspezifische Merkmale, wie beispielsweise die DX-Codierung eines Films, ebenfalls erkannt werden. Auch die Stege 66 zwischen den verschiedenen Bildfeldern (z.B. Fig. 3, Steg 66 zwischen den Bildfeldern 61 und 62) können mitabgetastet und diese Messergebnisse nach bekannten Verfahren ausgewertet werden. Vorteilhaft ist auch die Kombination des Prismas 70 aus zwei (oder mehreren) Teilen 70a und 70b, da dadurch erreicht wird,dass die Abstände der von den einzelnen Fotoempfängern erfassten spektralen Bereiche voneinander bezüglich der Wellenlänge etwa gleich gross sind und somit die farbliche Auflösung etwa konstant ist (Fig. 2). Als besonders geeignet für eine solche Kombination des Prismas 70 aus zwei Teilen 70a und 70b haben sich die Gläser BK 7 (Brechungsindex: n₁ = 1,65) für den Teil 70a und SF 2 (Brechungsindex: n₂ = 1,52) für den Teil 70b erwiesen. Der Prismenwinkel des ersten Prismateils 70a ist dabei aus dem Bereich von etwa α₁= 30°-35° gewählt, insbesondere beträgt er α₁= 33,6°, der Prismenwinkel des zweiten Prismateils 70b beträgt etwa α₂ = 10°, insbesondere beträgt er α₂ = 10,03°.

Alternative Ausgestaltungen des Kopiergeräts sind ebenfalls möglich. So kann beispielsweise die Maske 42 in der Nähe der Messlichtquelle 40 im Strahlengang angeordnet sein oder die Maske kann direkt auf der Messlichtquelle angebracht sein. Das Prisma 70 kann aus mehr als zwei Teilen bestehen, wodurch man z.B. ein "Geradsichtprisma" erhalten kann, also ein Prisma 70, welches das ankommende Licht nach wie vor spektral zerlegt mit etwa konstanter farblicher Auflösung, die Strahlachse A (Fig. 2) aber im Unterschied zur Darstellung in Fig. 2 unverändert lässt. Auch kann die gesamte Kopiervorlage nach wie vor Zeile für Zeile abgetastet werden, auch wenn die gesamte Vorlage gleichzeitig beleuchtet wird, indem die Fotoempfängerzeilen Zeile für Zeile nacheinander ausgelesen werden. Selbstverständlich können auch die einzelnen eindimensionalen Fotoempfängerzeilen zu einem zweidimensionalen Fotoempfängerfeld körperlich zusammengefasst werden bzw. kann die Empfängeranordnung als solches zweidimensionales Fotoempfängerfeld ausgebildet sein. Auch dann hat das Kopiergerät immer noch den Vorteil, dass die Spektren der Abtastbereiche einer Abtastzeile der Kopiervorlage mit nur einer Fotoempfängerzeile des Fotoempfängerfeldes gemessen werden und so im Vergleich zum aus EP-A-0 312 499 bekannten Gerät, bei dem für die Ausmessung der Abtastbereiche einer Abtastzeile der Kopiervorlage ein zweidimensionales Fotoempfängerfeld erforderlich ist, quasi eine räumliche Dimension eingespart wird.

## Patentansprüche

1. Fotografisches Farbkopiergerät mit einer Projektionsanordnung (3), um eine Kopiervorlage (N) auf lichtempfindliches Kopiermaterial (M) abzubilden, mit einer fotoelektrischen Messanordnung (4), um die Kopiervorlage in einer Vielzahl von kleinen, in über die Kopiervorlage verlaufenden Abtastzeilen (620) angeordneten Abtastbereichen (621-631) auszumessen, und mit einer mit der Messanordnung und der Projektionsanordnung zusammenwirkenden Belichtungssteuerung (5) zur Festlegung der das Kopiermaterial beaufschlagenden Kopierlichtmengen, wobei die Messanordnung (4) eine Lichtquelle (40) zur Beleuchtung der Kopiervorlage und eine Fotoempfängeranordnung (8) zur Erfassung des von den einzelnen Abtastbereichen der Kopiervorlage stammenden Messlichts sowie dispersive optische Mittel (70) zur Zerlegung des von den Abtastbereichen der Kopiervorlage stammenden Messlichts in eine Vielzahl von schmalen Spektralbereichen und abbildende optische Mittel (702) zur Lenkung des Messlichts auf die Fotoempfängeranordnung umfasst, wobei ferner die Fotoempfängeranordnung (8) eine Vielzahl von in Gruppen (828) angeordneten Fotoempfängern (8281) aufweist und das von den einzelnen in jeweils einer Abtastzeile liegenden Abtastbereichen stammende Messlicht jeweils eine separate zugeordnete Gruppe von Fotoempfängern beaufschlagt und die einzelnen Spektralbereiche des jeweils von einem Abtastbereich stammenden Messlichts auf separate Fotoempfänger innerhalb der dem betreffenden Abtastbereich zugeordneten Gruppe von Fotoempfängern fallen, dadurch gekennzeichnet, dass die Fotoempfängeranordnung (8) eine Fotoempfängerzeile (81) ist, die optisch parallel zu der Abtastzeile (620) verlaufend angeordnet ist, wobei die einzelnen Gruppen (828) von Fotoempfängern (8281) hintereinander in der Fotoempfängerzeile angeordnet sind, dass in unmittelbarer Nähe der Kopiervorlage (N) eine Maskenanordnung (42) vorgesehen ist, welche die einzelnen Abtastbereiche (621-631) der Kopiervorlage innerhalb einer Abtastzeile (620) festlegt, und dass die dispersiven Mittel (70) das von diesen Abtastbereichen (621-631) stammende Messlicht optisch parallel zu der Abtastzeile (620) zerlegen.

2. Kopiergerät nach Anpruch 1, dadurch gekennzeichnet, dass wenigstens eine weitere Fotoempfängerzeile (82) vorgesehen ist, die in analoger Weise mit aus den Abtastbereichen einer weiteren Abtastzeile stammendem Messlicht beaufschlagt ist.

3. Kopiergerät nach Anspruch 2, dadurch gekennzeichnet, dass die Fotoempfängerzeilen (81,82,etc.) zu einem Fotoempfängerfeld zusammengefasst bzw. durch ein solches gebildet sind.

4. Kopiergerät nach Anspruch 2 oder 3, dadurch gekennzeichnet, dass für jede Abtastzeile der Kopiervorlage eine eigene Fotoempfängerzeile vorgesehen ist.

5. Kopiergerät nach einem der Ansprüche 1 bis 4, dadurch gekennzeichnet, dass die Fotoempfänger (8281 etc.) ladungsgekoppelte lichtelektrische Wandler sind.

6. Kopiergerät nach einem der Ansprüche 1-6, dadurch gekennzeichnet, dass die dispersiven optischen Mittel wenigstens ein optisches Prisma (70) umfassen, dessen Brechkante (710) senkrecht zu den Abtastzeilen (620) angeordnet ist und welches mit dem von allen Abtastbereichen einer Abtastzeile stammenden Messlicht gleichzeitig beaufschlagbar ist.

7. Kopiergerät nach Anspruch einem der Ansprüche 1 bis 6, dadurch gekennzeichnet, dass die Maskenanordnung eine Schlitzmaske (42,42') mit einer der Anzahl der Abtastbereiche innerhalb einer Abtastzeile entsprechenden Anzahl von Schlitzen (421-431) ist.

8. Kopiergerät nach Anspruch 7, dadurch gekennzeichnet, dass die Schlitzmaske (42') sich über die gesamte Kopiervorlage (N) erstreckt und vorzugsweise ihre Schlitze (421'-431') im wesentlichen senkrecht zu den Abtastzeilen (620) verlaufen.

9. Kopiergerät nach einem der Ansprüche 6 bis 8, dadurch gekennzeichnet, dass das optische Prisma (70) zwei Teilprismen (70a,70b) umfasst, wobei das eine (70a) einen Prismenwinkel (α₁) von etwa 30-35° und einen Brechungsindex (n₁) von etwa 1,52 und das andere (70b) einen Prismenwinkel von etwa 10° und einen Brechungsindex (n₂) von etwa 1,65 aufweist.

## Claims

1. A photographic colour copying apparatus comprising a projection arrangement (3) for imaging a copying master (N) onto photosensitive copying material (M), a photoelectric measuring arrangement (4) for measuring the copying master in a plurality of small scanning sections (621-631) arranged in scanning lines (620) which extend over the copying master, and an exposure control system (5) co-operating with the measuring arrangement and the projection arrangement for determining the quantities of copying light falling on the copying material, the measuring arrangement (4) comprising a source of light (40) for illuminating the copying master and a photoreceiver arrangement (8) for detecting the measuring light originating in the individual scanning sections of the copying master, and also dispersive optical means (70) for decomposing the measuring light originating in the scanning sections of the copying master into a plurality of narrow spectral ranges, and optical imaging means (702) for directing the measuring light onto the photoreceiver arrangement, and the photoreceiver arrangement (8) also comprising a plurality of photoreceivers (8281) arranged in groups (828), and the measuring light originating in each of the individual scanning sections located in a scanning line falling on a separate, associated group of photoreceivers, and the individual spectral ranges of the measuring light originating in a scanning section being incident on separate photoreceivers within the group of photoreceivers associated with the particular scanning section, wherein the photoreceiver arrangement (8) is a photoreceiver line (81) which is so arranged that it extends optically parallel to the scanning line (620), the individual groups (828) of photoreceivers (8281) being arranged behind one another in the photoreceiver line, a mask arrangement (42) is arranged in the immediate vicinity of the copying master (N), which mask arrangement (42) determines the individual scanning sections (621-631) of the copying master within one scanning line (620), and the dispersive means (70) decompose the measuring light originating in those scanning sections (621-631), optically parallel to the scanning line (620).

2. A copying apparatus according to claim 1, wherein at least one additional line (82) of photoreceivers is provided upon which falls in an analogous manner measuring light originating in the scanning sections of another scanning line.

3. A copying apparatus according to claim 2, wherein the photoreceiver lines (81, 82, etc.) are combined to form a photoreceiver field or are formed by such a field.

4. A copying apparatus according to claim 2 or claim 3, wherein each scanning line of the copying master is provided with its own photoreceiver line.

5. A copying apparatus according to any one of claims 1 to 4, wherein the photoreceivers (8281 etc.) are charge-coupled photoelectric transducers.

6. A copying apparatus according to any one of claims 1 to 6, wherein the dispersive optical means comprise at least one optical prism (70), the refracting edge (710) of which is arranged perpendicular to the scanning lines (620) and upon which the measuring light originating in all of the scanning sections of a scanning line can fall simultaneously.

7. A copying apparatus according to any one of claims 1 to 6, wherein the mask arrangement is a slit mask (42, 42') having a number of slits (421-431) corresponding to the number of scanning sections within one scanning line.

8. A copying apparatus according to claim 7, wherein the slit mask (42') extends over the entire copying master (N) and its slits (421'-431') extend preferably substantially perpendicular to the scanning lines (620).

9. A copying apparatus according to any one of claims 6 to 8, wherein the optical prism (70) comprises two partial prisms (70a, 70b), one (70a) of which has a prism angle (α₁) of approximately from 30 to 35° and a refractive index (n₁) of approximately 1.52, and the other (70b) of which has a prism angle of approximately 10° and a refractive index (n₂) of approximately 1.65.

## Revendications

1. Tireuse photographique couleur, comprenant un système de projection (3) pour reproduire un original transparent (N) sur du matériau de tirage photosensible (M), un système de mesure photoélectrique (4) pour mesurer l'original en une multitude de petites zones d'exploration (621 - 631) disposées en lignes d'exploration (620) s'étendant sur l'original, ainsi qu'une commande d'exposition (5) coopérant avec le système de mesure et le système de projection pour déterminer les quantités de lumière de tirage à appliquer au matériau de tirage, dans laquelle le système de mesure (4) comporte une source lumineuse (40) pour éclairer l'original, un système de photodétecteurs (8) pour détecter la lumière de mesure provenant des différentes zones d'exploration de l'original, des moyens optiques dispersifs (70) pour décomposer la lumière de mesure provenant des zones d'exploration de l'original en une multitude de domaines spectraux étroits, ainsi que des moyens optiques de reproduction (702) pour guider la lumière de mesure sur le système de photodétecteurs, dans laquelle, en outre, le système de photodétecteurs (8) comporte une multitude de photodétecteurs (8281) disposés en groupes (828), la lumière de mesure provenant des différentes zones d'exploration situées chaque fois dans une ligne d'exploration illumine chaque fois un groupe coordonné séparé de photodétecteurs et les différents domaines spectraux de la lumière de mesure provenant d'une zone d'exploration tombent chaque fois sur des photodétecteurs séparés à l'intérieur du groupe de photodétecteurs coordonné à la zone d'exploration en question, caractérisée en ce que le système de photodétecteurs (8) est une ligne ou rangée de photodétecteurs (81) disposée optiquement en parallèle avec la ligne d'exploration (620), les différents groupes (828) de photodétecteurs (8281) étant disposés les uns derrière les autres dans la ligne de photodétecteurs, qu'un dispositif de masque (42) est prévu à proximité immédiate de l'original (N), dispositif qui fixe les différentes zones d'exploration (621 - 631) de l'original à l'intérieur d'une ligne d'exploration (620), et que les moyens dispersifs (70) décomposent la lumière de mesure provenant de ces zones d'exploration (621 - 631) optiquement en parallèle avec la ligne d'exploration (620).

2. Tireuse selon la revendication 1, caractérisée en ce qu'au moins une ligne de photodétecteurs supplémentaire (82) est prévue, qui est illuminée de façon analogue avec de la lumière de mesure provenant des zones d'exploration d'une ligne d'exploration supplémentaire.

3. Tireuse selon la revendication 2, caractérisée en ce que les lignes de photodetécteurs (81, 82 et ainsi de suite) sont rassemblées en un réseau de photodétecteurs ou sont formées par un tel réseau.

4. Tireuse selon la revendication 2 ou 3, caractérisée en ce qu'une ligne de photodétecteurs individuelle est prévue pour chaque ligne d'exploration de l'original.

5. Tireuse selon une des revendications 1 à 4, caractérisée en ce que les photodétecteurs (8281 et ainsi de suite) sont des convertisseurs photoélectriques à couplage de charge.

6. Tireuse selon une des revendications 1 à 6, caractérisée en ce que les moyens optiques dispersifs comprennent au moins un prisme optique (70) dont l'arête de réfraction (710) est orientée transversalement aux lignes d'exploration (620) et auquel peut être appliquée simultanément la lumière de mesure provenant de toutes les zones d'exploration d'une ligne d'exploration.

7. Tireuse selon une des revendications 1 à 6, caractérisée en ce que le dispositif de masque est un masque à fentes (42, 42') comportant un nombre de fentes (421 - 431) correspondant au nombre des zones d'exploration à l'intérieur d'une ligne d'exploration.

8. Tireuse selon la revendication 7, caractérisée en ce que le masque à fentes (42') s'étend sur tout l'original (N) et que, de préférence, ses fentes (421' - 431') sont orientées pour l'essentiel transversalement aux lignes d'exploration (620).

9. Tireuse selon une des revendications 6 à 8, caractérisée en ce que le prisme optique (70) comprend deux prismes partiels (70a, 70b) dont l'un (70a) présente un angle de prisme (α₁) d'environ 30 - 35° et un indice de réfraction (n₁) d'environ 1,52 et l'autre (70b) présente un angle de prisme d'environ 10° et un indice de réfraction (n₂) d'environ 1,65.
